# EUROPÄISCHE PATENTSCHRIFT

(11) **EP 1 230 057 B1**
(45) Veröffentlichungstag und Bekanntmachung des Hinweises auf die Patenterteilung: **16.07.2003**
(21) Anmeldenummer: 00984885.4
(22) Anmeldetag: 14.11.2000
(51) Int. Cl.: B23B 31/30, B23B 31/28

(54) **VORRICHTUNG ZUR ABSTÜTZUNG EINES MASCHINENTEILS BEI KRAFTBEAUFSCHLAGUNG**
DEVICE FOR SUPPORTING A MACHINE PART DURING SUBJECTION TO FORCE
DISPOSITIF SERVANT A SUPPORTER UNE PIECE DE MACHINE LORSQU'UNE FORCE S'EXERCE

(30) Priorität: 20.11.1999 DE 19955907
(43) Veröffentlichungstag der Anmeldung: 14.08.2002
(73) Patentinhaber: Paul Müller GmbH & Co. KG Unternehmens Beteiligungen, 90411 Nürnberg (DE)
(72) Erfinder: FELDMEIER, Fritz, 90475 Nürnberg (DE)
(74) Vertreter: Lösch, Christoph
(86) Internationale Anmeldenummer: DE0003954
(87) Internationale Veröffentlichungsnummer: WO01038026

(56) Entgegenhaltungen:
- FR-A- 2 208 319
- FR-A- 2 481 633
- US-A- 4 586 860

## Beschreibung

Die Erfindung betrifft eine Vorrichtung zur Abstützung eines ersten Maschinenteils bei Kraftbeaufschlagung eines zweiten Maschinenteils mit den weiteren Merkmalen des Oberbegriffs des Patentanspruchs 1 (siehe z.B. US-A- 4586860).

Bei rotierenden Systemen ist es meist erforderlich, daß eine Krafteinleitung im Stillstand erfolgt und während der Rotation jegliche Berührung zwischen rotierendem Teil und der krafteinleitender Einheit vermieden werden muß. Dies ist bei Teilewechselmechanismen an rotierenden Teilen, wie z.B. bei Maschinenspindeln in automatischen Bearbeitungsmaschinen, der Fall. Üblicherweise sind dabei das Gehäuse und die Kolbenstange der Einheit zum Einleiten der Kraft frei verschiebbar angeordnet und am rotierenden Maschinenteil ist ein fester Bund vorhanden, an dem die mit einem Umgriff, z.B. in Form von Klinkenhebeln, versehenen Teile, die mit dem Zylindergehäuse verbunden sind als erstes zur Anlage kommen und so den Kraftfluß in sich schließen, ehe die krafteinleitende Betätigungskraft wirksam wird. Derartige Lösungen benötigen häufig erheblichen Bauraum.

Eine andere, jedoch recht ungünstige Lösung ist es, ohne internen Kraftschluß die nach außen wirkenden Kräfte in der Lagerung des rotierenden Maschinenteils abzustützen, was sich auf die Genauigkeit, den Verschleiß und die Laufeigenschaften negativ auswirkt.

Der Erfindung liegt die Aufgabe zugrunde, eine besonders kompakte Vorrichtung zur Abstützung eines ersten Maschinenteil bei Kraftbeaufschlagung eines zweiten Maschinenteils anzubieten. Die Aufgabe wird durch die Merkmale des Anspruchs 1 in Verbindung mit den Merkmalen des Oberbegriffs gelöst. Vorteilhafte Ausführungsformen werden durch die Unteransprüche 2 - 14 realisiert.

Die erfindungsgemäße Vorrichtung umfaßt ein erstes hydraulisch, pneumatisch oder über einen Gewindetrieb elektromotorisch/elektromagnetisch verstellbares Bauelement zur Einleitung einer Gegenkraft in das erste Maschinenteil zur lagestabilen Abstützung des ersten Maschinenteils und ein zweites hydraulisch, pneumatisch oder über einen Gewindetrieb elektromotorisch/elektromagnetisch verstellbares Bauelement zur Kraftbeaufschlagung des zweiten Maschinenteils. Das erste und zweite Bauelement werden gleichzeitig aktiviert und gleichen wie zwei gegeneinanderwirkende Zylinder den internen Kraftfluß aus, ähnlich wie dies bei der Betätigung einer Injektionsspritze geschieht.

Dabei können das erste und zweite Bauelement eine Kolbenanordnung, einen Membranzylinder oder einen elektromagnetischen/elektromotorischen Verstellmechanismus aufweisen.

Bei einer Ausbildung als Kolbenanordnung legt sich der Entlastungskolben des ersten Bauelements zur Einleitung einer Gegenkraft gegen einen mit dem ersten Maschinenteil fest verbundenem Bund. Gleichzeitig kommt der Entlastungskolben an einer mit dem Bund maßlich genau abgestimmten Fläche am Zylindergehäuse zum Anliegen, der die Gegenkraft des Entlastungskolbens abstützt, so daß keine Kraft in das erste Maschinenteil bei dessen Abstützung bei Kraftbeaufschlagung des zweiten Maschinenteils eingeleitet wird.

Gleichzeitig wird im zweiten Bauelement ein Lösekolben, der das zweite Maschinenteil im bzw. am ersten Maschinenteil bewegen soll, mit Druck beaufschlagt. Als erstes kommt der Lösekolben zur Anlage am zweiten Maschinenteil und verschiebt dann das zweite Maschinenteil relativ zum ortsfesten ersten Maschinenteil. Die über den Lösekolben eingeleitete Kraft wird über den am Bund des ersten Maschinenteils anliegenden Entlastungskolben gehalten, so daß sich der Kraftfluß in sich schließt.

Vorteilhafterweise weisen das erste und das zweite Bauelement Membranzylinder auf, wodurch sich eine besonders kurze Baulänge ergibt, die einfach abzudichten ist. Die Membranzylinder können selbstfedernd sein oder durch eine Zusatzfederung in die Ausgangslage gebracht werden.

Ein besonders einfach ansteuerbarer Verstellmechanismus wird bei einer elektromagnetischen oder elektromotorischen Verstellung erreicht. Hierfür wird Bauraum für hydraulische oder pneumatische Versorgungskanäle eingespart, so daß eine elektromagnetische/elektromotorische Verstellung z.B. bei Mehrfach-Verstellsystemen verwendet werden kann.

Weitere Einzelheiten der Erfindung gehen aus den Ausführungsbeispielen in den Zeichnungsfiguren hervor. Es zeigen:
- Fig. 1: ein Querschnitt der Vorrichtung mit Membranzylindern,
- Fig .2: ein Querschnitt der Vorrichtung mit Kolbenanordnung,
- Fig. 3a: eine erste Ausführungsform eines Membranteils nach Fig. 1,
- Fig. 3b: eine zweite Ausführungsform eines Membranteils nach Fig. 1,
- Fig. 4: eine Darstellung eines Membranzylinders nach Fig. 1 mit einem Membranteil nach Fig. 3b,
- Fig. 5: ein Querschnitt der Vorrichtung mit elektromagnetischer/elektromotorischer Verstellung sowie
- Fig. 6: eine schematische Darstellung einer Ausführungsform mit elektromagnetischer/elektromotorischer Verstellung.

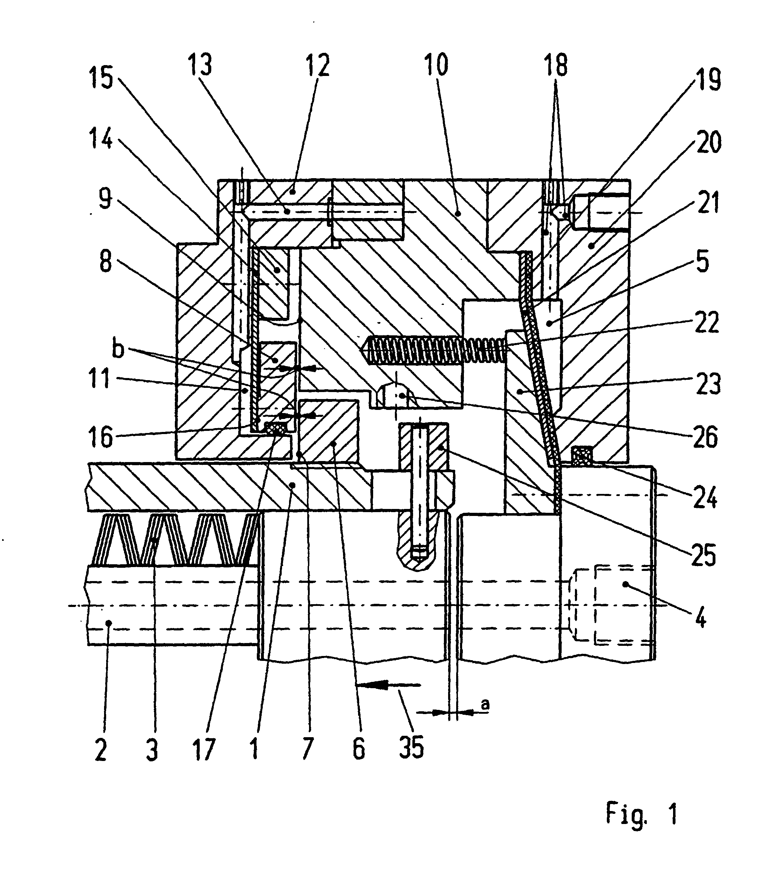

In Fig. 1 ist die erfindungsgemäße Vorrichtung in einer Ausführungsform mit Membranzylindern dargestellt. In einer drehbar gelagerten Welle 1 (erstes Maschinenteil) ist eine in Achsrichtung verschiebbare Zugstange 2 (zweites Maschinenteil) gelagert, die mittels eines Federpaketes 3 unter Spannung gehalten wird und dabei ein am anderen Wellenende angebrachtes Teil, z.B. ein auswechselbares Werkzeug (nicht abgebildet), hält oder festspannt.

Zum Auswechseln dieses Werkzeugs muß die Zugstange 2 entgegen der Federkraft des Federpaketes 3 in Richtung 35 verschoben werden. Dazu wird die Drehbewegung der Welle 1 zum Stillstand gebracht. Die Druckkammer 5 des Lösekolbens 4 (zweites Bauelement zur Krafteinleitung) wird mit einem Druckmedium beaufschlagt und bewegt den nicht rotierenden Lösekolben 4 in Richtung 35 gegen die Zugstange 2 um den Abstand a, der notwendig ist, bei Rotation der Welle 1 jegliche Berührung zwischen rotierender Welle 1 (bzw. Zugstange 2) und Kolben 4 auszuschließen. Nach dem Hub a baut sich am Lösekolben 4 die Druckkraft auf die nötig ist, um die Zugstange 2 gegen das Federpaket 3 soweit axial in Richtung 35 zu verschieben, daß das nicht abgebildete Werkzeug am anderen Ende der Welle 1 gelöst wird. Da sich das Federpaket 3 in der Welle 1 abstützt, wirkt diese eingeleitete Lösekraft auch auf die Welle 1 und damit auf die Lagerung, mit der die Welle 1 im Maschinenkörper gelagert ist. Um diese axiale Zusatzlast auf die Lagerung zu vermeiden wird die Welle 1 abgestützt.

Erfindungsgemäß wird dazu ein mit der Welle 1 festverbundener Bund 6 vorgesehen, an dessen planer Anlagefläche 7 sich der Entlastungskolben 8 (erstes Bauelement) anlegt und damit jegliche axiale Verschiebung der Welle 1 ausschließt. Der Entlastungskolben 8 legt sich gleichzeitig an die Anlagefläche 7 und eine Anschlagfläche 9 am Gehäuseteil 10 an. Der Freihub b des Entlastungskolben 8 zur Anlagefläche 7 und Anschlagfläche 9 ist exakt gleich, so daß die Welle 1 über den Bund 6 spiel- und kraftfrei vom Entlastungskolben 8 in ihrer Position gehalten wird.

Der in der Druckkammer 11 aufgebaute Druck erzeugt eine Kraft auf den Entlastungskolben 8 die größer als die Lösekraft des Lösekolbens 4 ist und sich an der Anschlagfläche 9 abstützt. Die Lösekraft kann dabei, wie in Fig 1 dargestellt, in einem in sich geschlossenen (Hydraulik-)System erzeugt werden oder von außen auf die Zugstange 2 wirken.

Der Entlastungskolben 8 ist Teil einer Baugruppe, die aus dem Gehäuse 12 mit der Druckkammer 11 und den Bohrungen 13 für den Zufluß des Druckmediums der Membran 14 besteht. Die Membran 14 ist über den Spannring 15 mit dem Gehäuse 12 sowie entlang einer schmalen Ringfläche 16 dicht mit dem ringförmigen Entlastungskolben 8 verbunden. Der Entlastungskolben 8 dichtet die Druckkammer 11 mit dem Dichtring 17 gegen das Gehäuse 12 ab. Bei Druckbeaufschlagung vollzieht der Entlastungskolben 8 die kurze Hubbewegung b und wird bei Abschalten des Druckes von der federnden Membrane in seine dargestellte Null-Lage zurückgezogen. Die Membran 14 ist eine ringförmige Scheibe aus dünnen federndem Material, vorzugsweise Federbandstahl, und wirkt zusammen mit dem Entlastungskolben 8 als Kolben, der ausreichend groß bemessen ist, um die erforderliche axiale Gegenkraft aufzubringen und zieht den Entlastungskolben 8 im drucklosen Zustand in die Null-Lage.

Dem Entlastungskolben 8 steht über das Gehäuseteil 10 verbunden der Lösekolben 4 gegenüber. Die Lösekraft des Lösekolbens 4 wird in der Druckkammer 5 erzeugt. Das Druckmedium, das durch die Bohrungen 18 zugeführt wird, drückt auf die Membran 19, die am äußeren Durchmesser zwischen das Gehäuseteil 10 und dem Gehäuseteil 20 der Löseeinheit dicht geklemmt ist und am inneren Durchmesser mit dem Lösekolben 4 verbunden ist, und bewegt den Lösekolben 4 in Richtung 35 zur Zugstange 2.

Nach der Leerhubstrecke a, das ist der Sicherheitsabstand der notwendig ist, um jegliche Berührung während des Drehens der Welle 1 zwischen Zugstange 2 und Lösekolben 4 zu verhindern, drückt der Lösekolben 4 auf die Zugstange 2 und verschiebt diese, nach Überwindung der Federkraft des Federpakets 3, relativ zur Welle 1, um das Lösen und Wechseln des Werkzeugs zu ermöglichen. Die Welle 1 wird dabei von dem Entlastungskolben 8, der am Wellenbund 6 anliegt, abgestützt, so daß die Welle kraftfrei bleibt. Der Kraftfluß ist in sich geschlossen vom Lösekolben 4 über den Wellenbund 6, den Entlastungskolben 8 und die verbundenen Gehäuseteile 12, 10 und 20.

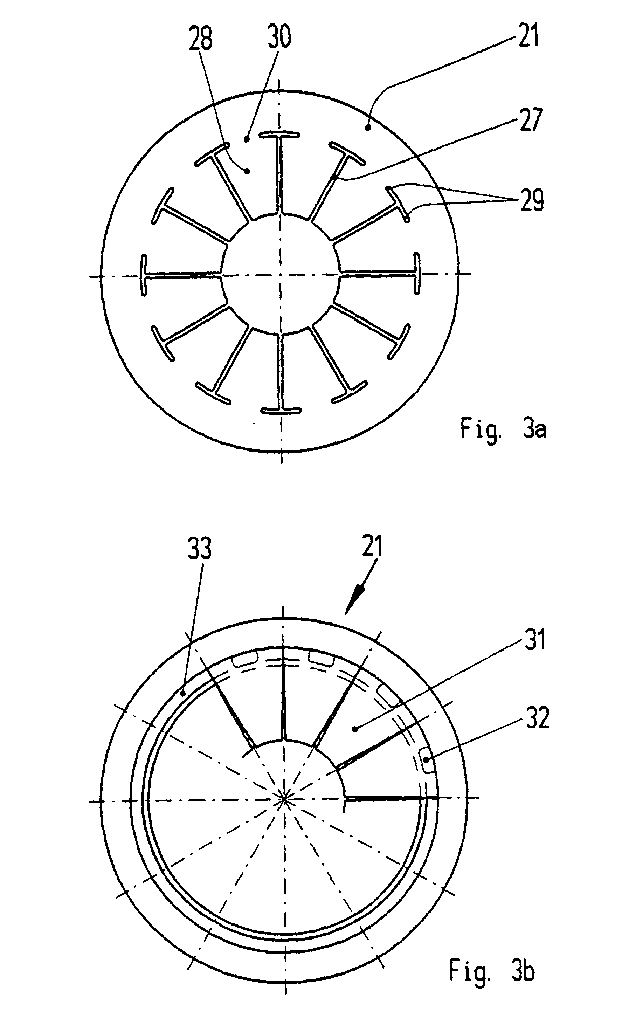

Da der Hub des Lösekolbens 4 deutlich größer als der des Entlastungskolbens 8 ist, kann eine zweiteilige Membran vorgesehen sein. Die reißfeste, aber sehr flexible Membran 19 besteht aus verstärktem, gummierten Gewebe und wird durch das Membranteil 21 gegen Ausbeulen abgestützt. Dieses Membranteil 21 besteht vorzugsweise aus einem Metallblech oder sehr festem Kunststoff und ist zur Erhöhung der axialen Beweglichkeit vom Innenrand ausgehend radial bis zum Einspanndurchmesser in geeigneter Weise geschlitzt (vgl. Fig. 3a).

Die Rückstellbewegung der Membrane wird durch Federn 22, die auf dem Bund 23 am Lösekolben 4 drücken, erreicht. Die Löseeinheit ist mit dem Dichtring 24 zwischen Gehäuse 20 und Lösekolben 4 abgedichtet. Die Membranfläche der Löseeinheit (zweites Bauelement) ist, um eine gute axiale Bewegbarkeit zu erzielen, deutlich größer als die Membranfläche der Entlastungseinheit (erstes Bauelement) zur Einleitung der Gegenkraft. Dementsprechend werden die Druckkammern 11 und 5 mit unterschiedlichen Drücken durch die Bohrungen 13 und 18 versorgt.

Da bei der Druckbeaufschlagung der Volumenstrom in der Entlastungseinheit wesentlich geringer als in der Löseeinheit ist ist sichergestellt, daß bei gleichzeitiger Druckbeaufschlagung (durch ein gemeinsames Hydrauliksystem) der Entlastungskolben 8 bereits am Bund 6 anliegt, ehe die Lösekraft durch den Lösekolben 4 wirksam wird. Zur Überwachung der Lösebewegung der Zugstange 2 ist ein Signalring 25 mit der Zugstange 2 verbunden, der die Hubbewegung mitmacht, so daß der im Gehäuseteil 10 fest oder verstellbar befestigte Sensor in der Bohrung 26 aktiviert wird. Es können einer oder mehrere Sensoren nebeneinander oder am Umfang versetzt angebracht werden. (nicht abgebildet).

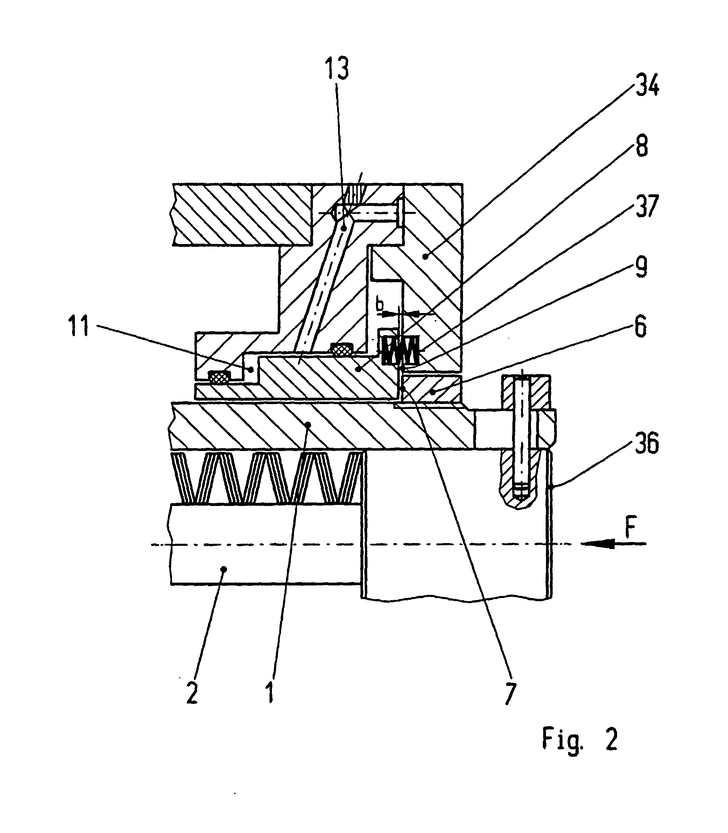

In Fig. 2 weist das erste Bauelement eine Kolbenanordnung auf. Die Welle 1 ist mit dem Bund 6 festverbunden. Dessen Anlagefläche 7 hat genau den gleichen Abstand b zum Entlastungskolben 8 wie dieser zur Anschlagfläche 9 am Gehäusedeckel 34. Der Entlastungskolben 8 wird durch die Bohrungen 13 in der Druckkammer 11 mit Druckmedium beaufschlagt und gegen die Anlagefläche 7 und Anschlagfläche 9 bewegt, wo er mit einer Kraft anliegt, die größer als die am Zugstangenkopf 36 der Zugstange 2 eingeleitete Kraft F des Lösekolbens 4 (nicht abgebildet) ist. Mittels Federkraft der Feder 37 oder bei entsprechender Ausführung des Entlastungskolbens 8 als doppelt wirkender Kolben mittels Gegendruck (nicht abgebildet) wird der Entlastungskolben 8 in die Ausgangsstellung zurückgestellt.

Fig. 3a zeigt eine mögliche Ausführungsform eines Membranteils 21, welches die flexible Membran 19 ganzflächig abstützt. Das Membranteil 21 wird mit seiner äußeren Randzone gleichzeitig mit der Membran 19 zwischen die Gehäuseteile 10 und 20 konzentrisch eingespannt. Die Abstützfläche des Membranteils 21 für die flexible Membran 19 wird durch dünne, radiale Schlitze 27 in eine Vielzahl von Sektoren 28 getrennt. Die Beweglichkeit der einzelnen Sektoren 28 wird durch die tangentialen Schlitze 29, die nur eine ausreichend kurze Verbindung 30 stehen lassen, scharnierartig erleichtert. Da der Innenrand des Membranteils 21 frei ist, entsteht somit ein insgesamt gut bewegliches Stützelement, das einerseits durch die Druckkraft der Membran 19 und andererseits die Rückstellkraft der Feder 22 hin- und herbewegt wird.

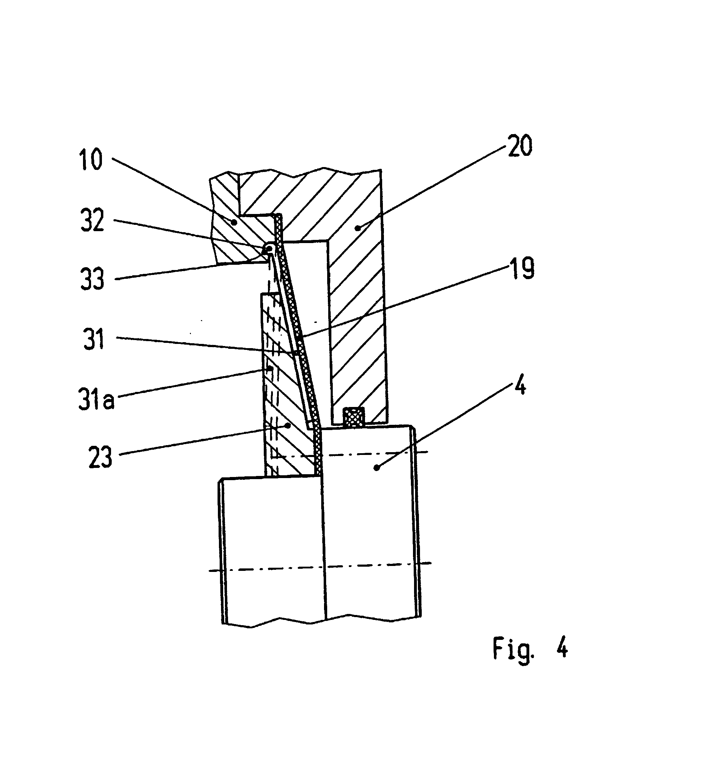

Fig 3b zeigt eine weitere Ausführung eines Membranteils 21. Hier besteht die Stützfläche des Membranteils 21 für die flexible Membran 19 aus einzelnen, nicht miteinander verbundenen Segmenten 31, die am Außenrand mittels einer zylindrischen Verdickung 32 im Gehäuseteil 10 in eine ringförmige Nut 33 in Achsrichtung kippbar eingehängt sind (vgl. Fig. 4). Diese Segmente 31 liegen an der flexiblen Membran 19 an und werden mittels der Feder 22 und dem Bund 23 am Lösekolben 4 gegen die Membran 19 gedrückt. In Fig 4 sind auch die beiden Segmente 31 und 31 a des Membranteils 21 bei entspannter und betätigter (gestrichelte Abbildung) Schaltposition des Lösekolbens 4 dargestellt.

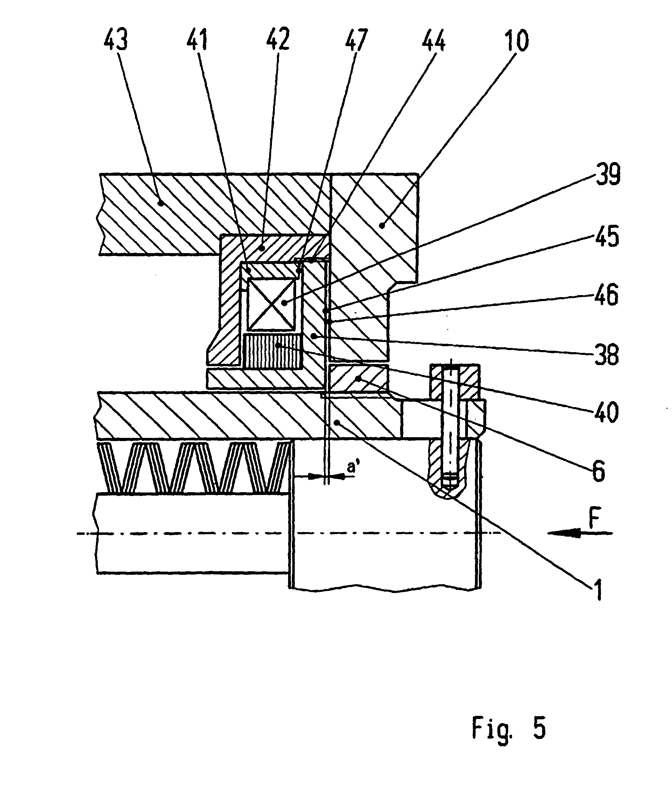

Fig. 5 stellt eine weitere Ausführungsform der Vorrichtung mit elektromagnetischer/elektromotorischer Verstellung dar, um eine axiale Bewegung in Kraftrichtung F auszuschließen. Der axial bewegliche Anschlag 38 wird durch einen Elektromotor bzw. Drehmagnet bewegt, der aus dem Stator 39 und dem Rotor 40 besteht. Der Stator 39 wird von einer dickwandigen Hülse 41 umschlossen, die in das Gehäuse 42 gepreßt ist, das wiederum verdrehsicher von der Spindelhülse 43 aufgenommen wird. Der Rotor 40 ist verdrehsicher auf dem axialen Teil des Anschlags 38 befestigt. Der Anschlag 38 ist über das Gewinde 44 drehbar mit dem Gehäuse 42 verbunden, wodurch bei Drehung des Anschlags 38 durch den Elektromotor/Drehmagnet die Axialbewegung a' des Anschlags 38 zwischen den Anschlagfläche 45 und der Anschlagfläche 46 des Gehäuseteils 10 erfolgt.

Bei aktiviertem Anschlag 38 werden über dessen Anschlagfläche 45 die Anschlagfläche 46 und der Bund 6 der Welle 1 kontaktiert und der Bund 6 abgestützt. Der deaktivierte Anschlag 38 liegt an der Hülsenanschlagfläche 47 der Hülse 41 an. Das Gewinde 44 ist selbsthemmend, so daß die Anschlagfläche 45 sich unter Last F nicht relativ zur Anschlagfläche 46 verschieben kann. Der Elektromotor/Drehmagnet wird über nicht abgebildete Drähte mit Strom versorgt.

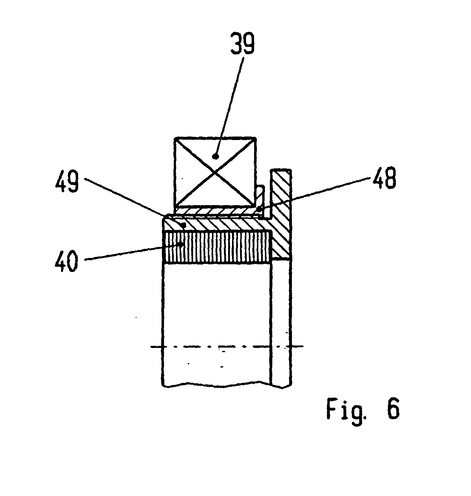

Fig. 6 zeigt eine weitere schematische Darstellung einer elektromagnetischen/elektromotorischen Verstellung. Im Luftspalt zwischen Stator 39 und Rotor 40 ist ein Gewinde angebracht. Der Stator 39 weist ein Innenteil (z.B. aus Kunststoff) mit einem Innengewinde 48 auf, welches mit einem Außenteil des Rotors 40 mit Außengewinde 49 verschraubt ist. Hierdurch ist der Rotor 40 radial gelagert und führt bei Drehung im Stator 39 die Zustellbewegung a' gemäß Fig. 5 aus.

Die in den Fig. 5 und 6 abgebildeten elektromagnetischen/elektromotorischen Verstellmechanismen können mit sämtlichen in den Fig. 1 - 4 abgebildeten oder beschriebenen Anordnungen zur Aktivierung des Lösekolbens 4 kombiniert werden.

## Patentansprüche

1. Vorrichtung zur Abstützung eines ersten Maschinenteils bei Kraftbeaufschlagung eines zweiten Maschinenteils, welches im ersten Maschinenteil aufgenommen ist, insbesondere Vorrichtung zur Abstützung einer Welle (1) mit in Axialrichtung verschiebbarer Zugstange (2) bei Kraftbeaufschlagung der Zugstange (2), z.B. zum Teilewechsel von an der Welle angebrachten Werkzeugen in automatischen Bearbeitungsmaschinen, mit einem ersten verstellbaren Bauelement zur Einleitung einer Gegenkraft in das erste Maschinenteil zur lagestabilen Abstützung des ersten Maschinenteils und einem zweiten verstellbaren Bauelement zur Kraftbeaufschlagung des zweiten Maschinenteils,
**dadurch gekennzeichnet, daß** das erste verstellbare Bauelement und das zweite verstellbare Bauelement als Membranzylinder ausgebildet sind.

2. Vorrichtung nach Anspruch 1,
**dadurch gekennzeichnet, daß** das erste Bauelement eine Kolbenanordnung aufweist.

3. Vorrichtung nach Anspruch 1 oder 2,
**dadurch gekennzeichnet, daß** das erste Maschinenteil als Welle (1) und das zweite Maschinenteil als Zugstange (2) ausgebildet sind.

4. Vorrichtung nach Anspruch 3,
**dadurch gekennzeichnet, daß** die Welle (1) einen Bund (6) als Anlagefläche zur Einleitung der Gegenkraft aufweist.

5. Vorrichtung nach Anspruch 3 oder 4,
**dadurch gekennzeichnet, daß** die Zugstange (2) einen Zugstangenkopf (36) zur Kraftbeaufschlagung aufweist.

6. Vorrichtung nach einem der Ansprüche 2 - 5,
**dadurch gekennzeichnet, daß** die Kolbenanordnung einen Entlastungskolben (8) zur Einleitung einer Gegenkraft zur lagestabilen Abstützung aufweist.

7. Vorrichtung nach Anspruch 6,
**dadurch gekennzeichnet, daß** der Entlastungskolben (8) über ein Federelement federnd angeordnet ist.

8. Vorrichtung nach Anspruch 6 oder 7,
**dadurch gekennzeichnet, daß** der Entlastungskolben (8) als doppelt wirkender Kolben ausgebildet ist.

9. Vorrichtung nach einem der vorhergehenden Ansprüche,
**dadurch gekennzeichnet, daß** das zweite Bauelement einen Lösekolben (4) zur Kraftbeaufschlagung des zweiten Maschinenteils bzw. der Zugstange (2) aufweist.

10. Vorrichtung nach Anspruch 9,
**dadurch gekennzeichnet, daß** der Lösekolben (4) über ein Federelement (22) federnd angeordnet ist.

11. Vorrichtung nach Anspruch 1,
**dadurch gekennzeichnet, daß** erste Bauelement einen elektromagnetischen oder elektromotorischen Verstellmechanismus aufweist.

12. Vorrichtung nach Anspruch 11,
**dadurch gekennzeichnet, daß** das erste Bauelement einen Stator (39) und einen Rotor (40) aufweist.

13. Vorrichtung nach Anspruch 12,
**dadurch gekennzeichnet, daß** der Rotor (40) mit einem verstellbaren Anschlag (38) verbunden ist.

14. Vorrrichtung nach Anspruch 13,
**dadurch gekennzeichnet, daß** der Anschlag (38) über ein Gewinde (44) mit einem Gehäuse (42) verschiebbar verbunden ist.

## Claims

1. Device for supporting a first machine part when a second machine part is subjected to force, said second machine part being accommodated in the first machine part, in particular device for supporting a shaft (1) having a tension rod (2), which can be displaced in the axial direction, when the tension rod (2) is subjected to force, for example for changing parts of tools mounted on the shaft in automatic processing machines, with a first adjustable component provided for introducing a counterforce into the first machine part for the purpose of supporting the first machine part in a stable position and a second adjustable component provided for subjecting the second machine part to force, **characterized in that** the first adjustable component and the second adjustable component are designed as diaphragm cylinders.

2. Device according to Claim 1, **characterized in that** the first component has a piston arrangement.

3. Device according to Claim 1 or 2, **characterized in that** the first machine part is designed as a shaft (1) and the second machine part is designed as a tension rod (2).

4. Device according to Claim 3, **characterized in that** the shaft (1) has a collar (6) as a bearing surface for introducing the counterforce.

5. Device according to Claim 3 or 4, **characterized in that** the tension rod (2) has a tension-rod head (36) for subjecting to force.

6. Device according to one of Claims 2-5, **characterized in that** the piston arrangement has a relief piston (8) for introducing a counterforce for the purpose of providing support in a stable position.

7. Device according to Claim 6, **characterized in that** the relief piston (8) is arranged resiliently via a spring element.

8. Device according to Claim 6 or 7, **characterized in that** the relief piston (8) is designed as a double-acting piston.

9. Device according to one of the preceding claims, **characterized in that** the second component has a release piston (4) for subjecting the second machine part or the tension rod (2) to force.

10. Device according to Claim 9, **characterized in that** the release piston (4) is arranged resiliently via a spring element (22).

11. Device according to Claim 1, **characterized in that** the first component has an electromagnetic or electrically powered adjusting mechanism.

12. Device according to Claim 11, **characterized in that** the first component has a stator (39) and a rotor (40).

13. Device according to Claim 12, **characterized in that** the rotor (40) is connected to an adjustable stop (38).

14. Device according to Claim 13, **characterized in that** the stop (38) is connected displaceably to a housing (42) via a thread (44).

## Revendications

1. Dispositif servant à supporter une première pièce de machine lorsqu'une force s'exerce sur une deuxième pièce de machine qui est reçue dans la première pièce de machine, en particulier dispositif servant à supporter un arbre (1) avec une tige de traction (2) déplaçable dans la direction axiale lorsqu'une force s'exerce sur la tige de traction (2), par exemple pour le remplacement partiel d'outils montés sur l'arbre dans des machines de traitement automatiques, comprenant un premier composant réglable pour introduire une force conjuguée dans la première pièce de machine en vue de supporter en position stable la première pièce de machine et un deuxième composant réglable pour exercer une force sur la deuxième pièce de machine,
**caractérisé en ce que**
le premier composant réglable et le deuxième composant réglable sont réalisés en tant que cylindres à membrane.

2. Dispositif selon la revendication 1,
**caractérisé en ce que** le premier composant présente un agencement de piston.

3. Dispositif selon la revendication 1 ou 2,
**caractérisé en ce que** la première pièce de machine est réalisée en tant qu'arbre (1) et la deuxième pièce de machine est réalisée en tant que tige de traction (2).

4. Dispositif selon la revendication 3,
**caractérisé en ce que** l'arbre (1) présente un épaulement (6) servant de face d'appui pour l'introduction de la force conjuguée.

5. Dispositif selon la revendication 3 ou 4,
**caractérisé en ce que** la tige de traction (2) présente une tête de tige de traction (36) servant à exercer une force.

6. Dispositif selon l'une quelconque des revendications 2 à 5,
**caractérisé en ce que** l'agencement de piston présente un piston de détente (8) pour l'introduction d'une force conjuguée en vue du support en position stable.

7. Dispositif selon la revendication 6,
**caractérisé en ce que** le piston de détente (8) est disposé élastiquement sur un élément à ressort.

8. Dispositif selon la revendication 6 ou 7,
**caractérisé en ce que** le piston de détente (8) est réalisé en tant que piston à double effet.

9. Dispositif selon l'une quelconque des revendications précédentes,
**caractérisé en ce que** le deuxième composant présente un piston de déclenchement (4) pour exercer une force sur la deuxième pièce de machine ou sur la tige de traction (2).

10. Dispositif selon la revendication 9,
**caractérisé en ce que** le piston de déclenchement (4) est disposé élastiquement sur un élément à ressort (22).

11. Dispositif selon la revendication 1,
**caractérisé en ce que** le premier composant présente un mécanisme de réglage électromagnétique ou à moteur électrique.

12. Dispositif selon la revendication 11,
**caractérisé en ce que** le premier composant présente un stator (39) et un rotor (40).

13. Dispositif selon la revendication 12,
**caractérisé en ce que** le rotor (40) est connecté à une butée réglable (38).

14. Dispositif selon la revendication 13,
**caractérisé en ce que** la butée (38) est connectée de manière déplaçable par un filetage (44) à un boîtier (42).
